Europäisches Patentamt

European Patent Office

Office européen des brevets

(11) Veröffentlichungsnummer: **0 363 306**
**A1**

(12) **EUROPÄISCHE PATENTANMELDUNG**

(21) Anmeldenummer: 89710068.1

(51) Int. Cl.⁵: **B60K 28/16**

(22) Anmeldetag: 31.08.89

(30) Priorität: 03.10.88 DE 3833588

(43) Veröffentlichungstag der Anmeldung:
11.04.90 Patentblatt 90/15

(84) Benannte Vertragsstaaten:
ES FR GB IT SE

(71) Anmelder: **Daimler-Benz Aktiengesellschaft**
**Postfach 600202 Mercedesstrasse 136**
**D-7000 Stuttgart 60(DE)**

(72) Erfinder: **Hilburger, Walter**
**Egerländerstrasse 63**
**D-7440 Nürtingen(DE)**
Erfinder: **Ochs, Siegfried**
**Wilhelm-Enssle-Strasse 79**
**D-7064 Remshalden(DE)**

(54) **Antriebsschlupfregeleinrichtung für Kraftfahrzeuge.**

(57) Antriebsschlupfregeleinrichtung (ASR) für Kraftfahrzeuge bei der bei Durchdrehen eines angetriebenen Fahrzeugrades dieses gebremst wird und bei der gegebenenfalls zusätzlich bei Durchdrehen beider angetriebener Räder die Motorleistung reduziert wird, wobei ein Durchdrehen der Antriebsräder mittels Drehzahlsensoren und einer Elektronik erkannt wird und bei Vorliegen eines Durchdreh-Signals aufgrund des Überschreitens eines Differenzgeschwindigkeits-Schwellwertes zwischen angetriebener und nichtangetriebener Fahzeugachse die Leistung des Motors von der Elektronik während der Dauer des Durchdreh-Signals mittels eines Stellgliedes herabgeregelt wird, hingegen bei Abfall des Durchdreh-Signals wieder auf den vom Fahrer mittels des Fahrpedals vorgegebenen Sollwert hochgeregelt wird, wobei jedoch bei einer Leistungsreduzierung durch den Fahrer während eines ASR-Regelvorganges unter den von der ASR-Elektronik vorgegebenen Motorregelsollwert - insbesondere bei einer Gangschaltung - und einer erneuten Leistungssteigerung - insbesondere bei Beendigung des Schaltvorganges -, soweit diese innerhalb einer vorgegebenen Zeit erfolgt, als maximale Leistung nur der Wert wieder zugelassen wird, der auch vor der Leistungsreduzierung vorlag.

Fig.1

## Antriebsschlupfregeleinrichtung für Kraftfahrzeuge

Die Erfindung betrifft eine Antriebsschlupfregeleinrichtung (ASR) gemäß dem Oberbegiff des Anspruches.

Es ist eine gattungsgemäße ASR bekannt (DE-OS 35 44 294), welcher generell die Aufgabe zugrunde liegt, ein unkontrolliertes Durchdrehen der Antriebsräder beim Anfahren eines Fahrzeuges auf glattem Untergrund zu verhindern.

Das Durchdrehen der Räder wird von an diesen angeordneten Drehzahlsensoren erfasst und in einer Elektronik ausgewertet. Rutscht nur ein Rad durch, wird die zugehörige Radbremse z.B. über ein Ventil betätigt (Differentialbremse). Hierdurch wird über das Rad-Differential ein Antriebsmoment auf das andere, stillstehende Rad übertragen.

Drehen jedoch beide Antriebsräder durch, dann wird die Leistung des Antriebsmotors heruntergeregelt. Hierzu kann in das Gasgestänge eingegriffen und der vom Fahrer eingestellte Wert vermindert werden.

Die ASR-Motorregelung tritt also normalerweise in Kraft, wenn eine bestimmte Differenzgeschwindigkeit zwischen angetriebener und nichtangetriebener Achse vorliegt. Wird diese Geschwindigkeitsschwelle wieder unterschritten, schaltet die Motorregelung wieder ab und die Leistung des Motors wird auf den vom Fahrer über das Fahrpedal vorgegebenen Wert hochgeregelt.

Vor allem bei Gangschaltvorgängen, bei denen vor dem Auskuppeln die ASR-Motorregelung arbeitet, zeigt sich nach dem Wiedereinkuppeln und Beschleunigen, daß die bekannte ASR-Motorregelfunktion nicht immer in der Lage ist, die auftretende Überschußleistung abzufangen. Es können entsprechend hohe Schlupfamplituden auftreten und somit zu einer Instabilität des Fahrzeuges führen. Dies gilt gleichermaßen bei einer Leistungsreduzierung durch Rücknahme des Fahrpedals und gleich darauf wieder folgendem Gasgeben ohne Gangschaltvorgang, wie es z.B. einer Schreckreaktion oder einer Geschwindigkeitsanpassung entspricht.

Aufgabe der Erfindung ist es, eine gattungsgemäße ASR-Einrichtung so auszubilden, daß die Fahrstabilität des Fahrzeuges auch bei derartigen Vorgängen gewährleistet ist.

Diese Aufgabe wird bei einer gattungsgemäßen ASR-Einrichtung erfindungsgemäß mit den kennzeichnenden Merkmalen des Anspruches gelöst.

Die Erfindung geht hierbei von der Überlegung aus, daß die übertragbare Leistung z.B. vor und nach einem Schaltvorgang bei einigermaßen homogener Fahrbahnbeschaffenheit in etwa gleich ist, so daß als maximale Leistung nach einem Schaltvorgang nur der Wert wieder zugelassen werden sollte, der auch vor dem Schaltvorgang während eines ASR-Motorregelvorganges vorlag.

Ein Ausführungsbeispiel der Erfindung ist in der Zeichnung dargestellt und wird im folgenden näher beschrieben. Es zeigen:

Figur 1 ein schematisches Blockschaltbild der ASR-Einrichtung,

Figur 2 Kennliniendiagramme,

Figur 3 ein die Erfindung erläuterndes Diagramm und

Figur 4 ein Ablaufdiagramm.

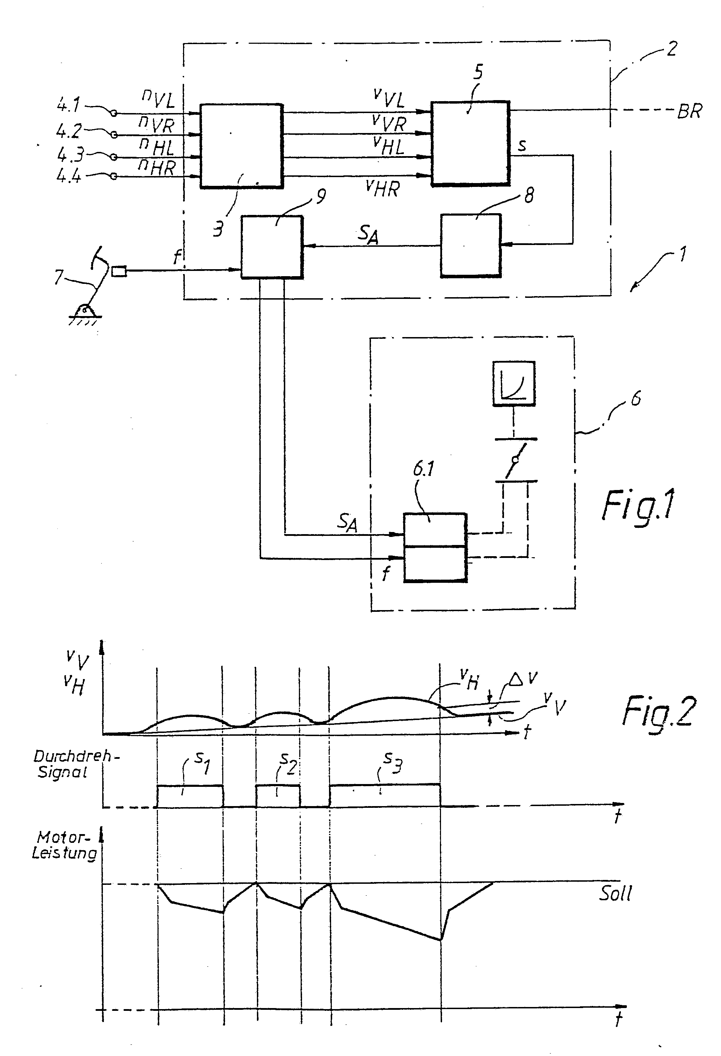

Gemäß Figur 1 werden einer Signalaufbereitungsstufe 3 der Elektronik 2 der ASR-Einrichtung 1 von Drehzahlsensoren 4.1 bis 4.4 Raddrehzahlsignale $n_{VL}$ und $n_{VR}$ der nicht angetriebenen Räder und $n_{HL}$ und $n_{HR}$ der angetriebenen Räder zugeführt und von dieser in Geschwindigkeitssignale $v_{VL}$, $v_{VR}$, $v_{HL}$ und $v_{HR}$ umgesetzt, welche wiederum einer Komparatorschaltung 5 zugeführt werden. In dieser wird u.a. festgestellt, ob beide Antriebsräder Schlupf aufweisen und es werden z.B. mittlere Geschwindigkeiten $v_V$ der nichtangetriebenen und $v_H$ der angetriebenen Achse gebildet - wobei $v_V$ der Fahrgeschwindigkeit gleichgesetzt werden kann - und miteinander verglichen. Überschreitet nunmehr $v_H$ gegenüber $v_V$ einen vorgegebenen Schwellwert$\Delta v$ - beispielsweise 1,8 km/h -, so wird ein Durchdreh-Signal S erzeugt, welches einem ASR-Modul 8 zugeführt wird, welcher einen entsprechenden Motorregelsollwert $S_A$ generiert und über einen Speicher 9 an einem Stellglied 6.1 einer Drosselklappensteuerung 6 (oder Einspritzpumpe) anlegt. Dieses Signal $S_A$ hat gegenüber dem ebenfalls über den Speicher 9 geführten Signal f des Fahrpedal-Sollwertes Vorrang, so daß die direkte Beeinflußung des Motors durch den Fahrer unterbunden ist. Das Signal $S_A$ bewirkt nun, daß die Motorleistung während der Dauer des Signals S herabgeregelt wird, wobei die Dauer des Signals S davon abhängt, wann aufgrund dieser Leistungsreduzierung $v_H$ gegenüber $v_V$ den vorgegebenen Schwellwert$\Delta v$ wieder unterschreitet. Wird dieser Schwellwert unterschritten, entfällt das Signal S und die Leistung des Motors wird wieder auf den vom Fahrer vorgegebenen Fahrpedal-Sollwert f hochgeregelt, es sei denn, daß hierbei der Schwellwert erneut überschritten und ein neues Durchdreh-Signal S generiert wird. Dieser Vorgang kann sich mehrmals wiederholen, wie dies in Figur 2 anhand der Signale $S_1$ bis $S_3$ dargestellt ist.

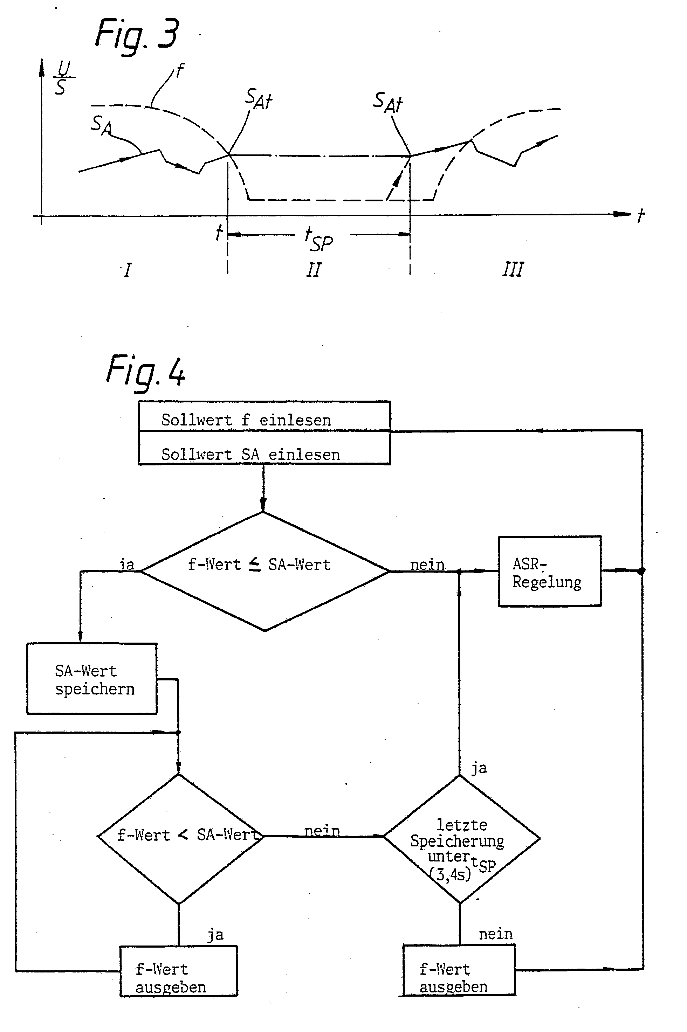

Wird nun während eines ASR-Motorregelvorganges I eine Leistungsreduzierung durchgeführt, bspw. eine Gangschaltung - siehe auch Fig.3 -, so folgt der Fahrpedal-Sollwert f bei der Rückstellbewegung des Fahrpedals 7 der gestrichelten Kennlinie. Im Zeitpunkt t entspricht dann der momentane Fahrpedal-Sollwert dem während des ASR-Regelvorganges erreichten Momentan-Regelsollwert des Motorregelsollwertes $S_A$ - ausgezogene Kennlinie. Dieser Momentan-Regelsollwert $S_{At}$ wird nun in dem durch die Überschneidung ($f/S_A$) aktivierten Speicher 9 für eine vorgegebene Zeit $t_{SP}$, bspw. 3,4 sec., gespeichert. Während des Gangschaltvorganges II geht der Fahrpedal-Sollwert f noch weiter zurück und steigt mit Beendigung des Schaltvorganges beim Beschleunigen durch Erhöhen des Fahrpedal-Sollwertes f mittels des Fahrpedals 7 wieder an. Erreicht hierbei der Fahrpedal-Sollwert f den gespeicherten Momentan-Regelsollwert $S_{At}$ innerhalb der vorgegebenen Zeit $t_{SP}$, so erfolgt der weitere Regelvorgang III nach dem Motorregelsollwert $S_A$; wird hingegen der Momentan-Regelsollwert $S_{At}$ erst nach Ablauf der Speicherzeit $t_{SP}$ erreicht, erfolgt der weitere Hochregelvorgang nach dem Fahrpedal-Sollwert f. Die hierzu im Speicher 9 erforderliche Ablauflogik ist in Figur 4 anhand eines Ablaufdiagrammes dargestellt und aus sich heraus verständlich.

Wie des weiteren aus Figur 1 noch ersichtlich ist, wird von der Komparatorschaltung 5 bei erkanntem einseitigem Schlupf eines Antriebsrades auch noch ein Signal zur Ansteuerung der Radbremse BR erzeugt.

Obwohl im Ausführungsbeispiel eine Beeinflußung der Motorleistung durch einen Eingriff in die Drosselklappensteuerung beschrieben ist, kann selbstverständlich auch ein Eingriff in die Zündung oder die Kraftstoffzufuhr erfolgen.

## Ansprüche

Antriebsschlupfregeleinrichtung (ASR) für Kraftfahrzeuge bei der bei Durchdrehen eines angetriebenen Fahrzeugrades dieses gebremst wird und bei der gegebenenfalls zusätzlich bei Durchdrehen beider angetriebener Räder die Motorleistung reduziert wird, wobei ein Durchdrehen der Antriebsräder mittels Drehzahlsensoren und einer Elektronik erkannt wird und bei Vorliegen eines Durchdreh-Signals aufgrund des Überschreitens eines Differenzgeschwindigkeits-Schwellwertes zwischen angetriebener und nichtangetriebener Fahrzeugachse die Leistung des Motors von der Elektronik während der Dauer des Durchdreh-Signals mittels eines Stellgliedes herabgeregelt wird, hingegen bei Abfall des Durchdreh-Signals wieder auf den vom Fahrer mittels des Fahrpedals vorgegebenen Sollwert hochgeregelt wird,
**dadurch gekennzeichnet,**
daß bei einer Rücknahme des vom Fahrer vorgegebenen Fahrpedal-Sollwertes (f) während eines ASR-Motorregelvorganges (I) auf oder unter den beim Regelvorgang zu einem Zeitpunkt (t) erreichten Momentan-Regelsollwert ($S_{At}$) - insbesondere bei einer Gangschaltung -, dieser zum Zeitpunkt (t) erreichte Momentan-Regelsollwert ($S_{At}$) für das Stellglied (6.1) erfasst wird, welcher auch dem momentanen Fahrpedal-Sollwert ($f_t$) zu diesem Zeitpunkt (t) beim Loslassen des Fahrpedals (7) während dessen Rückstellbewegung entspricht, daß der erfasste Momentan-Regelsollwert ($S_{At}$) für eine vorgegebene Zeit ($t_{SP}$) gespeichert wird, und daß nach der Leistungsrücknahme beim Wiederbeschleunigen -insbesondere nach der Gangschaltung - durch Vorgabe eines neuen Fahrpedal-Sollwertes (f) der Hochregelvorgang dem Fahrpedal-Sollwert (f) nur dann folgt, wenn der gespeicherte Momentan-Regelsollwert ($S_{At}$) nach der Zeit ($t_{SP}$) erreicht wird, hingegen dem Motorregelsollwertverlauf ($S_{AT}$) folgt, wenn der gespeicherte Momentan-Regelsollwert ($S_{AT}$) innerhalb der Zeit ($t_{SP}$) erreicht wird.

Fig.1

Fig.2

19.9.88 Fr.

EP 0 363 306 A1

## Fig. 3

$\frac{U}{S}$

$S_A$    $f$    $S_{At}$    $S_{At}$

$t$    $t_{SP}$

$t$

I    II    III

## Fig. 4

Sollwert f einlesen

Sollwert SA einlesen

f-Wert ≦ SA-Wert

ja ← | → nein

ASR-Regelung

SA-Wert speichern

f-Wert < SA-Wert    nein →    letzte Speicherung unter $t_{SP}$ (3,4s)

ja

ja

f-Wert ausgeben

nein

f-Wert ausgeben

15.9.88 Fr.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A2 - 0 064 669 <br> (ROBERT BOSCH) <br> * Gesamt * <br> -- | | B 60 K 28/16 |
| A | US - A - 4 733 760 <br> (INAGAKI) <br> * Zusammenfassung; Fig. * <br> -- | | |
| A | DE - A1 - 3 635 095 <br> (VOLKSWAGEN A.G.) <br> * Fig. * <br> -- | | |
| A | DE - A1 - 3 741 908 <br> (TOYOTA) <br> * Zusammenfassung; Fig. * <br> -- | | |
| A | US - A - 4 685 547 <br> (OHASHI) <br> * Fig. 1,2,4 * <br> -- | | |
| A | DE - A1 - 3 736 192 <br> (TOYOTA) <br> * Zusammenfassung * <br> ---- | | RECHERCHIERTE SACHGEBIETE (Int. Cl.4) <br><br> B 60 K <br> B 60 T |

Der vorliegende Recherchenbericht wurde für alle Patentansprüche erstellt.

| Recherchenort <br> WIEN | Abschlußdatum der Recherche <br> 21-11-1989 | Prüfer <br> HENGL |
|---|---|---|